Europäisches Patentamt

European Patent Office

Office européen des brevets

(19)

(11) Veröffentlichungsnummer : **0 009 109**
**B1**

(12) # EUROPÄISCHE PATENTSCHRIFT

(45) Veröffentlichungstag der Patentschrift :
30.09.81

(21) Anmeldenummer : 79102882.2

(22) Anmeldetag : 09.08.79

(51) Int. Cl.³ : **C 09 K   3/10**

(54) **Thermisch expandierbares Dichtungsmaterial für Fugen, Hohlräume oder dgl. und Verfahren zum Abdichten von Wänden oder Türen im Brandfall.**

(30) Priorität : 26.09.78 DE 2841907

(43) Veröffentlichungstag der Anmeldung :
02.04.80 (Patentblatt 80/07)

(45) Bekanntmachung des Hinweises auf die Patenterteilung : 30.09.81 Patentblatt 81/39

(84) Benannte Vertragsstaaten :
**AT BE CH DE FR GB IT NL SE**

(56) Entgegenhaltungen :
**FR - A - 2 379 737**

(73) Patentinhaber : **CHEMIE LINZ AKTIENGESELLS-
CHAFT**
**St. Peter-Strasse 25**
**A-4020 Linz (AT)**
**BE CH FR GB IT NL SE AT**
**Lentia Gesellschaft mit beschränkter Haftung**
**Schwanthalerstrasse 39 Postfach 20 16 26**
**D-8000 München 2 (DE)**
**DE**

(72) Erfinder : **Czepel, Hubert, Dr.**
**Marienberg 31**
**A-4045 Linz (AT)**
Erfinder : **Jilek, Franz, Ing.**
**Erlenweg 16**
**A-4210 Gallneukirchen (AT)**
Erfinder : **Zöchbauer, Heinz**
**Denkstrasse 25**
**A-4020 Linz (AT)**

EP 0 009 109 B1

## Thermisch expandierbares Dichtungsmaterial für Fugen, Hohlräume oder dgl. und Verfahren zum Abdichten von Wänden oder Türen im Brandfall

Die vorliegende Erfindung betrifft ein neues, verbessertes Dichtungsmaterial für Fugen, Hohlräume oder dgl., das aus einem Vlies oder Gewebe als Träger besteht, auf das eine Schicht auf Basis blähfähigem Graphit aufgetragen ist, die sich im Brandfall aufblähen, sowie ein Verfahren zum Abdichten von Wänden oder Türen im Brandfall unter Verwendung des erfindungsgemäßen Dichtungsmaterials.

Zur Fugenabdichtung bei Brandschutztüren wurden bisher vornehmlich wasserhältige Alkalisilikate verwendet, die auf Dichtstreifen aus Blech (siehe DE-C-1 659 608 und 2 529 550) oder aber aus Glasfaservlies- oder Gewebe (siehe DE-B-1 176 546 und DE-B-1 169 832) in konzentrierter Form aufgetragen und bei Temperaturen unter 150 °C getrocknet worden waren. Diese Alkalisilikate spalten unter Hitzeeinwirkung Wasserdampf ab, wodurch ein aufgeschäumter, jedoch spröder Belag als Hitzeisolator gebildet wird. Der Nachteil derartiger Fugenabdichtmassen auf Silikatbasis ist ihre Hygroskopizität und $CO_2$-Aufnahmebereitschaft, wodurch durch feuchte Luft ihre Bläfähigkeit beeinträchtigt wird. Daher müssen sie durch eine Decklackschicht oder durch eine Folienumhüllung möglichst luftdicht abgeschlossen werden. Außerdem sind sie im aufgeschäumten Zustand spröde und gegen mechanische Beanspruchung empfindlich. Das Expansionsvermögen dieser Silikatmassen beträgt etwa 1 : 7 (30 Minuten bei 200 °C).

Aus der AT-A-330 320 ist ferner bekannt, daß auf Basis von blähfähigem Graphit, der in einem Bindemittelsystem aus halogenhaltigen Elastomeren und Phenol-Aldehyd-Harzen eingebettet ist, brandschützende Anstrich- bzw. Beschichtungssysteme hergestellt werden können. Bei Hitzeeinwirkung bilden derartige Anstrichsysteme locker gebundene, schaumartige Massen mit zwar geringer Eigenfestigkeit, jedoch sehr guter thermischer Isolierfähigkeit. Die lockere Struktur und geringe Eigenfestigkeit macht die Verwendung eines anorganischen, wasserunempfindlichen Deckanstriches auf Silikatbasis notwendig, die auch die blähgraphithaltige, hochporöse Koksschicht vor einem oxydativen Angriff der Flammgase im brandfall schützen soll.

Es wurde nun überraschenderweise gefunden, daß man ein thermisch expandierbares Dichtungsmaterial mit ausgezeichneten Abdichtungseigenschaften herstellen kann, wenn man Blähgraphit mit bestimmten Mengen Polychlorbutadien, einem Alkylphenol-Formaldehydharz und gegebenenfalls Aluminiumhydroxyd sowie ev. Mineralfasern unter Zusatz von Stabilisatoren mischt und auf ein Vlies oder Gewebe als Trägermaterial aufbringt. Derartige Dichtungsmaterialien bringen im brandfall nicht nur den Vorteil eines hohen Blähvermögens mit sich, sondern zeichnen sich im Gegensatz zu den bisher üblichen Dichtungsmaterialien auf Silikatbasis durch ein gutes Fließ- und Kriechvermögen aus, das es befähigt, über Kanten und Ecken bzw. in winkelförmige Forstsetzungen der zu dichtenden Fuge zu fließen und damit eine völlige Abdichtung zu erzielen, wobei der Zusammenhalt innerhalb der Masse nicht verlorengeht. Das erfindungsgemäße Fugenabdichtungsmaterial besitzt überdies genügend Festigkeit, um durch den Sog des Brandes nicht abzubröckeln, was überraschend ist, weil die bisher bekannten Massen auf Basis Blähgraphit stets zur Erhöhung der Festigkeit durch einen den Zusammenhalt bewirkenden Decklack geschützt wurden, während im erfindungsgemäßen Fall ein Decklack nachteilig wäre, da dann das Material keine Fließeigenschaften entwickeln könnte. Ein weiterer Vorteil des erfindungsgemäßen Materials ist das rasche Einsetzen des Blähvorganges.

Gegenstand der Erfindung ist daher ein thermisch expandierbares Dichtungsmaterial für Fugen, Hohlräume oder dgl., das dadurch gekennzeichnet ist, daß es auf Basis eines Vlieses oder Gewebes aus Glas oder Kunststoff als Träger aufgebaut ist, das mit einer Masse, enthaltend auf 100 Gew.Teile blähfähigem Graphit 10-30 Gew. Teile Polychlorbutadien, 1-40 Gew.Teile eines Alkylphenol-Formaldehyd-Harzes und 1-3 Gew.Teile an sich bekannter Stabilisatoren, beschichtet ist. Als Alkylphenol-Formaldehydharz dient besonders bevorzugt tert. Butylphenol-Formaldehydharz.

Das Material kann gegebenenfalls bis zu 30 Gew.Teile einer anorganischen Faser und bis zu 80 Gew.Teile Aluminiumhydroxyd enthalten.

Das erfindungsgemäße Dichtungsmaterial hat gegenüber den wasserhältigen Alkalisilikaten den Vorteil, daß es auch bei längerem Kontakt mit der Atmosphäre beliebigen Feuchtigkeitsgehaltes ohne jede Schutzbeschichtung oder Ummantelung seine Blähfähigkeit behält. Ferner hat das erfindungsgemäße Dichtungsmaterial abhängig vom Gehalt an anorganischen Komponenten und an Elastomeren eine gewisse Eigenelastizität, ganz im Gegensatz zu den sehr spröden Platten und Streifen aus wasserhältigen Alkalisilikaten.

Das erfindungsgemäße Dichtungsmaterial kann die blähfähige Masse in verschiedener Menge und zwar je nach erwünschter Höhe im aufgeblähten Zustand, enthalten. Berücksichtigt man, daß der Dickenblähfaktor der erfindungsgemäß angewendeten blähfähigen Masse bei 200 °C und 30 Minuten etwa 1 : 10 bis 1 : 15 beträgt, so kann man die Auftragungsmenge etwa abschätzen, um eine vollständige Dichtung der Fuge oder des Hohlraumes zu erzielen. Besonders im Falle der Abdichtung von Fugen, insbesondere solchen bei Feuerschutztüren, empfiehlt es sich, den Auftrag etwas höher zu wählen, als der zur Abdichtung nötigen Höhe der aufgeblähten Masse entspricht, um die Fließfähigkeit der Masse in dazu abgewinkelte Hohlräume voll ausnützen zu können und so den Dichtungseffekt noch zu verbessern. In der Regel wird man mit einer Beschichtung des Trägers von 500 bis 2 500 g/m² das Auslangen finden.

Die Herstellung der erfindungsgemäßen Dichtungsmaterials erfolgt am besten durch Beschichten des Trägermaterials mit einer streichfähigen Masse, die durch Anrühren der Bestandteile mit einem Lösungsmittel erhalten wird. Zur Herstellung dieser streichfähigen Masse hat es sich besonders bewährt, zunächst eine Lösung des Polychlorbutadiens und des Phenolharzes in einem organischen Lösungsmittel herzustellen, in der dann der Blähgraphit und die anorganischen Bestandteile der Masse suspendiert werden. Die Lösungsmittelmenge wird hierbei so gewählt, daß eine streichfähige Paste mit sehr guter homogener Verteilung der als Bindemittel dienenden Harze entsteht. Als Lösungsmittel dienen z.B. aromatische Kohlenwasserstoffe wie Benzol oder Toluol, Benzin Und/oder Aceton.

Die dabei erhaltene Paste wird möglicht gleichmäßig auf das Trägermaterial aufgetragen, das z.B. ein Glasfaservlies, z.B. eines Flächengewichtes von 30-100 g/m², ein Polyester- oder Polypropylenvlies, (Flächengewicht ca. 50 g/m²) oder ein Glasseidengewebe (Flächengewicht 50-500 g/m²) sein kann. Die Paste wird dann auf das Vlies möglichst homogen aufgetragen, wobei man entweder Spachteln oder auch das Arbeiten mit handwerklichen oder maschinellen Beschichtungsapparaten heranziehen kann.

Nach erfolgter Beschichtung wird das Lösungsmittel bei normaler oder erhöhter Temperatur abgedunstet. Man kann aber auch von einer wäßrigen Suspension der Bindeharze, nämlich Polychlorbutadien und Phenolharz ausgehen, und diesen unter starkem Rühren den Blähgraphit und die anorganischen Bestandteile zusetzen. Nach Auftragen muß das Wasser abgedunstet werden, was naturgemäß schwieriger ist als das Abdunsten der organischen Lösungsmittel, aber den Vorteil hat, daß keine organischen Dämpfe in der Abluft sind, die vor Austritt des Gases in die Atmosphäre zurückgewonnen oder zumindest beseitigt werden müssen.

Ein weiterer Gegenstand der vorliegenden Erfindung ist ein Verfahren zum Abdichten von Fugen, Hohlräumen und/oder Bohrungen bei Türen, Wänden, Fenstern oder dgl. mit Hilfe des erfindungsgemäßen Dichtungsmaterials im Brandfalle. Gemäß diesem Verfahren wird das erfindungsgemäße Dichtungsmaterial, wenn nötig, in entsprechend große Streifen oder Flecke geschnitten und in die zu schützende Fuge oder den Hohlraum eingelegt, wobei der Streifen entweder lose liegenbleiben kann oder z.B. durch Kleben befestigt wird.

Das erfindungsgemäße Dichtungsmaterial dient bevorzugt für die Abdichtung von Fugen, vor allem solchen an den Rändern von Feuerschutztüren. Selbstverständlich sind auch andere Anwendungen möglich, bei denen Hohlräume mit hitzedämmenden Materialien gegen Feyer- und Rauchausbreitung gesichert werden sollen, z.B. für Kabeldurchführungen, Rohr- und Lüftungsdurchgänge etc. Im Brandfall werden diese Hohlräume durch die Hitzeeinwirkung mit dem durch Aufblähen entstandenen brandisolierenden Dämmstoff ausgefüllt. Bei der Verwendung zur Fugenabdichtung von Türen ist es besonders überraschend, daß das Dichtungsmaterial ohne besondere Schutzhaut der laufenden mechanischen Behandlung standhält, ohne Risse oder Hohlstellen zu bekommen, die im brandfall den Dichtungseffekt stören könnten.

## Beispiel 1

Herstellung des folienförmigen Fugenabdichtungsmaterials. In einer kontinuierlach arbeitenden Beschichtungsanlage, bestehend aus einem Behälter für das lösungsmittelhältige Beschichtungsmaterial, einer Transportvorrichtung für das Trägermaterial, einer Streickrakel und einem Trockenkanal, wurde ein fadenverstärktes 50 g/m² Glasfaservlies, 100 cm breit, mit einer Feuchtmenge von 2 kg/m² Beschichtungsmasse in kontinuierlicher Fahrweise bestrichen.

Das lösungsmittelfeuchte, beschichtete Band wurde in unmittelbarer Folge, zur Entfernung des Lösungsmittels, durch den Trockenkanal befördert und anschließend in Abschnitten von 2 m Länge abgenommen und gestapelt. Das Flächengewicht der fertigen Abschnitte des Fugenabdichtungsmaterials betrug 1 450 gm² (1 400 g/m² Beschichtungsmasse + 50 g/m² Glasfaservlies).

Das lösungsmittelhältige Beschichtungsmaterial hatte einen Lösungsmittelanteil von ca. 50 Gew. %. Als Lösungsmittel wurde ein Gemisch von etwa gleichen Gew.Teilen Toluol, Benzin und Aceton verwendet.

Die trockene Beschichtung hatte folgende Zusammensetzung :
100 Gew. Teile Blähgraphit
24 Gew. Teile Polychloropren
20 Gew. Teile Phenolharz (tertiäres Butyl-Phenolformaldehydharz)
48 Gew. Teile Aluminiumhydroxyd
10 Gew. Teile Asbestfasern
2 Gew. Teile Stabilisatoren.
Die Dicke des Folienmaterials betrug 1,9 ± 0,2 mm.
Der Blähfaktor beim Expandieren in der Hitze (Trockenschrank 30 min 200 °C) betrug 1 : 13.
Dieses Material wurde einem Brandversuch in einem Kleinbrandversuchsofen nach DIN 18082 unterworfen. Getestet wurde feuerhemmende Türen (T 30) die zwischen der Zarge und dem Türblatt mit dem Dichtungsmaterial versehen wurden.

Im Versuchsablauf zeigte sich, daß die Blähung des erfindungsgemäßen Dichtungsmaterials bereits 5 Minuten nach Versuchsbeginn einsetzt und die Fugen nach 10 Minuten Versuchsdauer völlig dicht geschlossen waren.

Nach Beendigung des Brandversuches (30 Minuten) wurde die Türprototype nach vorherigem Öffnungsversuch ausgebaut. Es zeigte sich, daß das Material die Fugen völlig ausgefüllt hatte und durch seine gute Fließfähigkeit außerdem noch in Fugenfortsetzungen eingedrungen war, was eine vollkommene Abdichtung bewirkte.

Im Vergleich dazu wurde eine gleiche Türe mit einem bekannten Dichtungsmaterial aus Träger und wasserhältigem Alkalisilikat verwendet. Dieses Material begann im Kleinbrandversuchsofen unter gleichen Bedingungen erst in der 17 Minute mit dem Blähvorgang. Der Fugenabschluß war erst nach 22 Minuten gegeben. Die Fugen waren am Versuchsende geschlossen, jedoch war mangels Fließtendenz keine Ausfüllung von Fugenfortsetzungen festzustellen.

Beispiel 2-11

Analog Beispiel 1 wurden noch weitere Mischungen der in der Tabelle gegebenen Zusammensetzung hergestellt, wobei auch hier ein Lösungsmittelgehalt von etwa 50 Gew. % eingestellt wurde. Sie wurden dann durch Spachtelung auf ein Glasfaservlies eines Flächengewichtes von 50 $g/m^2$ aufgetragen und getrocknet. Das Material wurde in Streifen von 20 mm Breite geschnitten und besaß eine Schichtdicke von 1,9 ± 0,2 mm.

Zusammen mit dem Material gemäß Beispiel 1 wurden sie einer Messung der Blähfähigkeit (Blähfaktor bei unbehinderter Blähung) und einer Prüfung auf ihr Kriech-bzw. Fließverhalten unterzogen.

Der Blähfaktor wurde durch Dickenmessung nach 30 minütiger Lagerzeit bei 200 °C im Trockenschrank bestimmt, worauf der Faktor aus Schichtdicke nach der Lagerung dividiert durch jene vor der Lagerung angegeben wurde. Das Kriech-bzw. Fließverhalten wurde folgendermaßen bestimmt: Der zu prüfende Streifen, (Streifenbreite : 20 mm) des Fugenabdichtungsmaterials wurde in eine winkelförmige (90°) ausgebildete Fuge aus Stahlblech (lichte Weite 4 mm) eingelegt. Danach wurde das den Streifen enthaltende Blech mit freier Brennerflamme bis zur maximalen Blähung des Fugeninhaltes erhitzt. Anschließend wurde die Breite des Dichtungsmaterialsaustrittes im offenen Schenkel der Fuge von der Winkelung ab gemessen.

Die Ergebnisse sind in der nachfolgenden Tabelle angegeben :

| Beispiele | | 2 | 3 | 4 | 5 | 6 | 7 | 8 | 9 | 10 | 11 |
|---|---|---|---|---|---|---|---|---|---|---|---|
| Zusammensetzung: | | | | | | | | | | | |
| Gew.Teile Blähgraphit | | 100 | 100 | 100 | 100 | 100 | 100 | 100 | 100 | 100 | 100 |
| " " | Polychlorbutadien | 24 | 15 | 24 | 24 | 24 | 24 | 24 | 24 | 30 | 24 |
| " " | t-Butylphenolform-aldehydharz | 20 | 2 | 10 | 20 | 10 | 30 | 20 | 20 | 12,5 | 40 |
| " " | Stabilisator | 2 | 2 | 2 | 2 | 2 | 2 | 2 | 2 | 2 | 2 |
| " " | Asbestfasern | 10 | 5 | 20 | 0 | 0 | 20 | 0 | 0 | 0 | 0 |
| " " | Aluminiumhydroxyd | 48 | 0 | 20 | 48 | 48 | 48 | 0 | 80 | 0 | 0 |
| Blähfaktor (unbehinderte Blähung, 30 min 200° C) | | 1:13 | 1:16 | 1:12 | 1:13 | 1:17 | 1:9 | 1:13 | 1:15 | 1:15 | 1:9 |
| Fließverhalten % der ursprünglichen Breite | | 60 | 100 | 50 | 50 | 80 | 40 | 80 | 90 | 75 | 35 |

## Ansprüche

1. Thermisch expandierbares Dichtungsmaterial für Fugen, Hohlräume und dgl., dadurch gekennzeichnet, daß es auf Basis eines Vlieses oder Gewebes aus glas oder Kunststoff als Träger aufgebaut ist, das mit einer Masse, enthalten auf 100 Gew.Teile blähfähigen Graphit 10 bis 30 Gew.Teile Polychlorbutadien, 1 bis 40 Gew.Teile eines Alkylphenolformaldehydharzes und 1 bis 3 Gew.Teile an sich bekannter Stabilisatoren, beschichtet ist.

2. Dichtungsmaterial gemäß Anspruch 1, dadurch gekennzeichnet, daß die Beschichtung des Trägers 500 bis 2 500 $g/m^2$ beträgt.

3. Dichtungsmaterial gemäß den Ansprüchen 1 und 2, dadurch gekennzeichnet, daß die Beschichtungsmasse auf 100 Gew.Teile blähfähigen graphit zusätzlich bis zu 30 Gew.Teile einer anorganischen Faser enthält.

4. Dichtungsmaterial gemäß den Ansprüchen 1 bis 3, dadurch gekennzeichnet, daß die Beschichtungsmasse auf 100 Gew.Teile blähfähigen Graphit zusätzlich bis zu 80 Gew.Teile Aluminiumhydroxyd enthält.

5. Verfahren zum Abdichten von Fugen, Hohlräumen oder Bohrungen oder dergleichen in Türen, Fenstern bzw. Wänden von Bauteilen im Brandfalle unter Verwendung des Dichtungsmaterials gemäß den Ansprüchen 1 bis 4, dadurch gekennzeichnet, daß das Dichtungsmaterial in die abzudichtenden Fugen oder Hohlräume eingelegt und/oder durch Kleben befestigt wird.

6. Verfahren gemäß Anspruch 5, dadurch gekennzeichnet, daß das Dichtungsmaterial vor dem Einlegen oder Befestigen in die entsprechende Größe zugeschnitten wird.

**Claims**

1. Thermally expandable sealant for joints, cavities and the like, characterised in that it is based on a fleece or fabric, made of glass or plastic, as the carrier, which is coated with a composition containing, per 100 parts by weight of expandable graphite, 10 to 30 parts by weight of polychlorobutadiene, 1 to 40 parts by weight of an alkylphenol/formaldehyde resin and 1 to 3 parts by weight of stabilisers known per se.

2. Sealant according to Claim 1, characterised in that the amount of coating on the carrier is 500 to 2 500 g/m$^2$.

3. Sealant according to Claims 1 and 2, characterised in that the coating composition additionally contains, per 100 parts by weight of expandable graphite, up to 30 parts by weight of an inorganic fibre.

4. Sealant according to Claims 1 to 3, characterised in that the coating composition additionally contains, per 100 parts by weight of expandable graphite, up to 80 parts by weight of aluminium hydroxide.

5. Process for sealing joints, cavities or holes or the like in doors, windows or walls of building structures in the event of a fire, by using the sealant according to Claims 1 to 4, characterised in that the sealant is inserted into the joints or cavities to be sealed and/or fixed therein by gluing.

6. Process according to Claim 5, characterised in that the sealant is cut to the appropriate size before being inserted or fixed.

**Revendications**

1. Matériau d'étanchéité thermo-expansible pour fentes, interstices ou analogues, caractérisé en ce qu'il est réalisé à base d'une nappe non tissée ou d'un tissu en verre ou matière plastique à titre de support, revêtu d'une masse renfermant, pour 100 parties en poids de graphite foisonnant, 10 à 30 parties en poids de polychlorobutadiène, 1 à 40 parties en poids d'une résine alkylphénol-formaldéhyde et de 1 à 3 parties en poids de stabilisants en soi connus.

2. Matériau d'étanchéité suivant la revendication 1, caractérisé en ce que le recouvrement du support représente de 500 à 2 500 g/m$^2$.

3. Matériau d'étanchéité suivant les revendications 1 et 2, caractérisé en ce que la masse de revêtement renferme en outre, pour 100 parties en poids de graphite foisonnant, jusqu'à 30 parties en poids d'une fibre inorganique.

4. Matériau d'étanchéité suivant les revendications 1 à 3, caractérisé en ce que la masse de revêtement renferme en outre, pour 100 parties en poids de graphite foisonnant, jusqu'à 80 parties en poids d'hydroxyde d'aluminium.

5. Procédé pour l'étanchéification de fentes, interstices ou perçages ou analogues dans des portes, fenêtres ou parois d'éléments de construction en cas d'incendie, utilisant le matériau d'étanchéité suivant les revendications 1 à 4, caractérisé en ce qu'on introduit le matériau d'étanchéité dans les joints ou les interstices devant être rendus étanches et (ou) on le fixe par collage.

6. Procédé suivant la revendication 5, caractérisé en ce que le matériau d'étanchéité est découpé à la dimension appropriée avant son insertion ou sa fixation.